# EUROPEAN PATENT SPECIFICATION

(11) **EP 4 121 306 B1**
(45) Date of publication and mention of the grant of the patent: **03.04.2024**
(21) Application number: 21714271.0
(22) Date of filing: 17.03.2021
(51) Int. Cl.: B60H 1/28, B62D 25/08

(54) **A MOTOR VEHICLE COMPRISING AN AIR INTAKE ASSEMBLY**
KRAFTFAHRZEUG MIT EINER LUFTEINLASSANORDNUNG
VÉHICULE À MOTEUR COMPRENANT UN ENSEMBLE D'ADMISSION D'AIR

(30) Priority: 17.03.2020 NL 2025150
(43) Date of publication of application: 25.01.2023
(73) Proprietor: DAF Trucks N.V., 5643 TW Eindhoven (NL)
(72) Inventor: LIGTHART, Erno François Caroli, 5643 TW Eindhoven (NL); VAN DEN BEUCKEN, Gerardus Theodorus Aldegonda, 5643 TW Eindhoven (NL); SABERI, Josef, 5643 TW Eindhoven (NL)
(74) Representative: V.O.
(86) International application number: PCT/NL2021/050180
(87) International publication number: WO 2021/187980

(56) References cited:
- EP-A1- 2 684 718
- EP-B1- 2 684 718
- WO-A1-2018/182539
- JP-B2- 3 090 418

## Description

### FIELD OF THE INVENTION

The invention relates to a motor vehicle according to the preamble of claim 1. Such as motor vehicle is for example known from WO2018182539A1.

### BACKGROUND OF THE INVENTION

It is known to provide vehicles with a climate control system, such as an HVAC (Heating Ventilation and Air Conditioning) system, in order to provide a comfortable climate in a driver cabin or passenger compartment. Typically, fresh air is supplied to the climate control system from environmental air exterior to the vehicle through an air intake assembly. Exterior air may however contain moisture, water or debris (such as leaves). The entry of such moisture, water or debris into the vehicle interior, in particular into the climate control system of the vehicle, is undesirable. In order to separate moisture, water and/or debris from the intake air, air intake assemblies can comprise filter assemblies or, for in particular separating moisture or water from the intake air, are constructed such that the air flow inside the air passage from the fresh air inlet to the outlet to the climate control system changes direction to separate water droplets from the stream of air to reduce the water content thereof.

### OBJECT OF THE INVENTION

In some motor vehicles, the available space between the front grille and the dash panel of the cabin is however restricted and accommodating an air intake assembly in which the air flow inside the air passage can change direction is technically difficult. It is therefore an object of the invention to provide an motor vehicle with a compact air intake assembly that can efficiently remove or separate water from exterior air.

### SUMMARY OF THE INVENTION

According to the invention at least one of the objects is obtained by providing a motor vehicle according to claim 1. In this manner a compact construction of the air intake assembly is feasible while moisture is efficiently removed from the fresh intake air. In particular moisture is efficiently removed from the fresh intake air since as a result of the inventive construction the air flow direction is diverted for a first time from a vertical direction downwards into a direction parallel to the driving direction through the at least on passage, for a second time from the direction parallel to the driving direction into a vertical direction upwards from the at least one passage and as a result of the under pressure provided by the climate control system for a third time from the vertical direction upwards to a direction opposite the normal direction through the transfer opening of the cover plate into the air outlet opening. As a result of these changes of direction of the air flow moisture contained in the air is removed therefrom by the centrifugal effect.

In an embodiment of a motor vehicle according to the invention the air intake chamber is defined by a top wall, the cover plate, side air guides extending downwards from the top wall, and a lower air guide extending between lower ends (18A, 19A) of the side air guides (18, 19), and the air intake assembly further comprises:
- a circumferential wall surrounding the air outlet opening in the dash panel, free end surfaces of the circumferential wall defining an aperture in fluid communication with the air outlet opening, the circumferential wall being positioned between the top wall and the lower air guide;
- the circumferential wall, the side air guides and the lower air guide preferably having the same depth;
- the cover plate engaging the free ends of the circumferential wall, free ends of the side air guides and a free end of the lower air guide; the at least one passage being arranged at a lower end of the cover plate, preferably such that the at least one passage is positioned between the lower air guide and a lowest portion of the circumferential wall. The side air guides can be are arranged symmetrical with regard to the circumferential wall or the side air guides can alternatively be arranged asymmetrical with regard to the circumferential wall, wherein preferably one side air guide of the pair of side air guides forms a part of the circumferential wall.

In an embodiment of a motor vehicle according to the invention the at least one passage has a cross-section area for allowing low speed transfer of air from the air intake chamber to the air-moisture separation chamber in a direction parallel to the normal driving direction of the motor vehicle, the cross-section area of the passage preferably being 1.5 times larger than the cross-section area of the air inlet opening. Preferably the cover plate comprises a plurality of passages. By using such a large passage the air flow passing through the passage will have a relatively low speed as a result of which the centrifugal force exerted on the moisture in the air flow will be larger than the centrifugal force exerted on the air in the air flow which is beneficial for separation of moisture from the air flow.

In another embodiment of a motor vehicle according to the invention an annular seal is provided between the cover plate and the free ends of the circumferential wall. Preferably a linear seal is provided between the cover plate and the free end of the lower air guide.

In a still further embodiment of a motor vehicle according to the invention the lower air guide is provided with a drain. Preferably the bottom wall of the air-moisture separation chamber is also provided with a drain. Moisture collected at the lower air guide and the bottom wall of the air-moisture separation chamber can be discharged via these drains for example during driving of the motor vehicle.

In another embodiment of a motor vehicle according to the invention the cover plate is removably or hingeably connected to the dash panel. Preferably the cover plate is fixedly attached to the front grille. It is then preferred that the front grille is removably or hingeably connected to the dash panel. In this manner unwanted items, such as leafs or debris, which have gathered on e.g. the lower air guide can be removed after the cover plate or front grille has been hinged away from the circumferential wall.

In order to filter out any remaining moisture or debris in the air entering the air outlet opening in the dash panel in an embodiment of a motor vehicle according to the invention a filter is provided in the air outlet opening.

### BRIEF DESCRIPTION OF THE DRAWINGS

The invention will be further explained with reference to the Figures, in which a non-limiting exemplary embodiment of according to the invention is shown:
Fig. 1 schematically shows a motor vehicle with an air intake assembly according to an embodiment of the invention;
Fig. 2 schematically shows an embodiment of the air intake assembly of the motor vehicle of Fig. 1 in which the cover plate has been left out and in which the air side guides are positioned symmetrical with regard to the circumferential wall;
Fig. 3 schematically shows an alternative embodiment of the air intake assembly of the motor vehicle of Fig. 1 in which the cover plate has been left out and in which the air side guides are positioned asymmetrical with regard to the circumferential wall;
Fig. 4 schematically shows the embodiment of the air intake assembly of the motor vehicle of Fig. 2 with the cover plate;
Fig. 5 schematically shows the cover plate of the air intake assembly of the motor vehicle of Fig. 4; and
Fig. 6 schematically shows an embodiment of the air intake assembly of the motor vehicle according to the invention in which the cover plate is attached to the front grille of the motor vehicle.

### DETAILED DESCRIPTION OF THE PREFERRED EMBODIMENTS

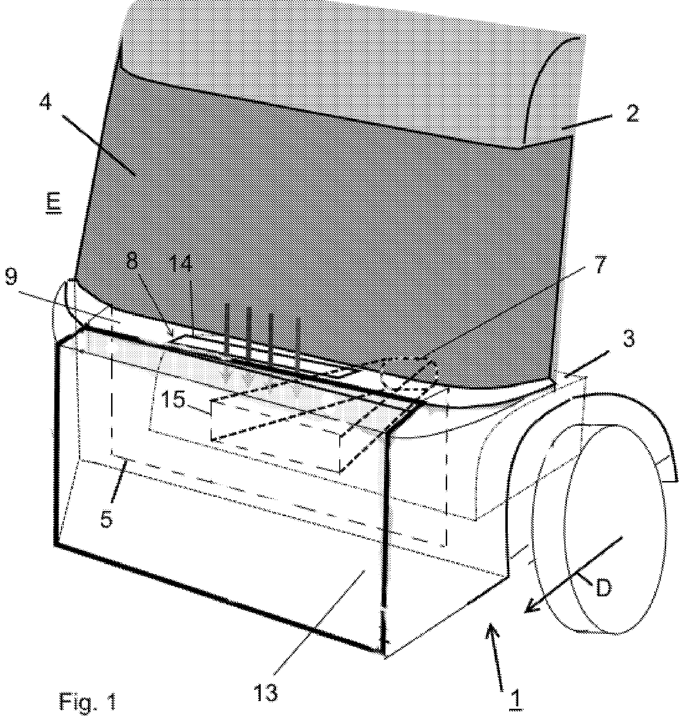

In Fig. 1 an embodiment of a motor vehicle 1 according to invention is schematically shown in perspective. The vehicle 1 comprises a front grille 13 and a driver cabin 2 having a front windscreen 4 and a dash panel 5 extending below the front windscreen 4. The front grille 13, the front windscreen 4 and the dash panel 5 are arranged substantially transversely to a normal driving direction D of the motor vehicle 1, which driving direction D is indicated by arrow D in Fig. 1. An engine 3 of the motor vehicle 1 may be located underneath or behind the driver cabin 2. The motor vehicle 1 can be a commercial motor vehicle or a large passenger car such as a bus. Such motor vehicles are also called forward control vehicles.

A climate control system 7, such as an HVAC-system, is present for controlling the climate in the driver cabin 2. For providing fresh air from an exterior E of the motor vehicle 1 to the climate control system 7 an air intake assembly 8 is provided. This air intake assembly 8 comprises an air inlet opening 14. The air inlet opening 14 is designed and adapted to receive air from the exterior E of the motor vehicle 1 and can be covered by a grating to prevent leafs or debris entering the air intake assembly 8. An air outlet opening 15 in the dash panel 5 conveys air coming from the air inlet opening 14 to the climate control system 7.

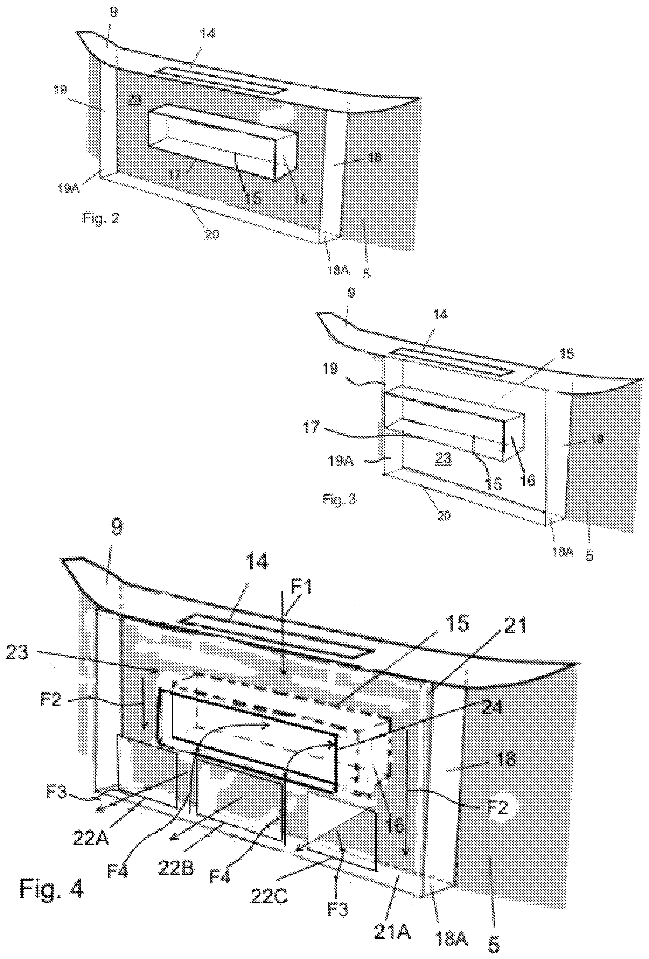

The air intake assembly 8 used in the motor vehicle according to the invention is more detailed explained with reference to the embodiments shown in Figures 2 to 6. As clearly shown in Figure 2 the air intake assembly 8 comprises a circumferential wall 16 surrounding the air outlet opening 15. Free end surfaces of the circumferential wall 16 define an aperture 17, which aperture 17 is in fluid communication with the air outlet opening 15.

A pair of side air guides 18, 19 extend downwards from a top wall 9 and in the embodiment shown in Figure 2 the side air guides 18, 19 are arranged symmetrical at both sides of the air inlet opening 14 and the circumferential wall 16. A lower air guide 20 extends between lower ends 18A, 19A of the side air guides 18, 19. As is visible in Figure 2 the circumferential wall 16 is positioned between the top wall 9 and the lower air guide 20.

In an alternative embodiment of a motor vehicle according to the invention shown in Figure 3 one side air guide 19 of the pair of side air guides 18, 19 forms a part of the circumferential wall 16, consequently the side air guides are positioned asymmetrical with regard to the circumferential wall.

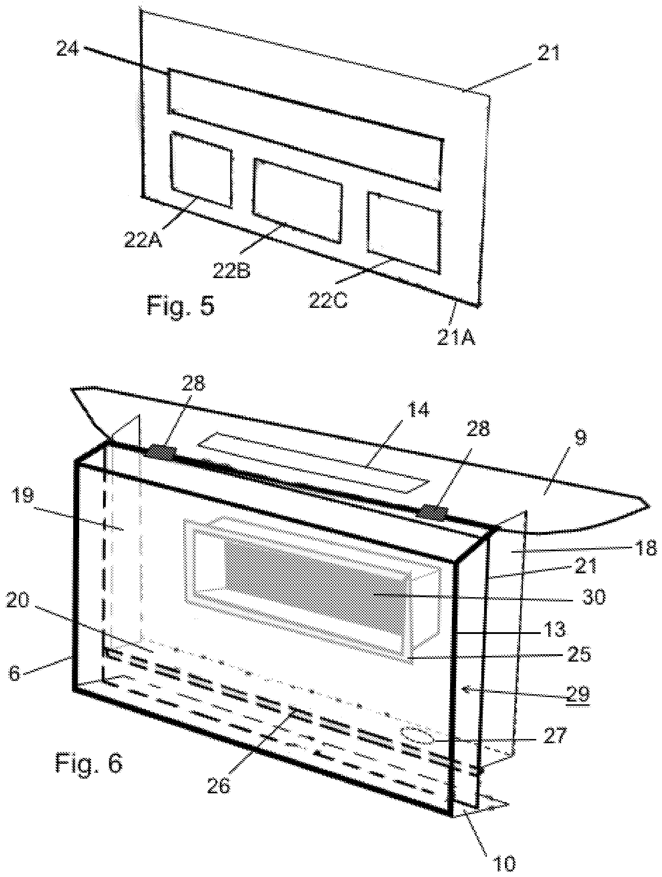

As shown in Figures 4 and 6 a cover plate 21 (for clarity as such shown in Figure 5) is vertically positioned between the dash panel 5 and the front grille 13 such that the cover plate 21 engages the free ends of the circumferential wall 16, free ends of the side air guides 18, 19 and a free end of the lower air guide 20. In this manner the top wall 9, the cover plate 21, the side air guides 18, 19, the lower air guide 20 and the circumferential wall 16 define an air intake chamber 23 there between. In the embodiment shown in the Figures 2, 3, 4 and 6 the circumferential wall 16, the side air guides 18, 19 and the lower air guide 20 have the same depth, so that a flat cover plate or a predominantly flat cover plate 21 can be used to engage the free ends of the circumferential wall 16, the side air guides 18, 19 and the lower air guide 20. Alternatively, in case the circumferential wall 16, the side air guides 18, 19 and the lower air guide 20 do not have the same depth the cover plate 21 can be profiled to obtain engagement with the free ends of the circumferential wall 16, the side air guides 18, 19 and the lower air guide 20.

The cover plate 21 is a solid plate comprising at least one passage (in the embodiment shown in Figures 4 and 5 the cover plate 21 comprises three passages 22A, 22B, 22C) arranged at a lower end 21A of the cover plate 21 and a transfer opening 24 positioned above the passages 22A, 22B, 22C. The passages 22A, 22B, 22C are preferably positioned at a height between the lower air guide 20 and a lowest portion of the circumferential wall 16.

With reference to Figure 4 exterior air enters the air inlet opening 14 in the top wall 9 in a substantially vertical downwards direction F1 and is passed into the air intake chamber 23. As a result of the side air guides 18, 19 the air is diverted in a vertical downwards direction F2. The lower air guide 20 diverts the air flow in a direction F3 parallel to the normal driving direction D through the passages 22A, 22B, 22C. The air is thus transferred from the air intake chamber 23 to an air-moisture separation chamber 29 (see Fig. 6) positioned between the cover plate 21 and the front grille 13.

The passages 22A, 22B, 22C are provided with a cross-section area which is relatively large, so that transfer of air from the air intake chamber 23 to the air-moisture separation chamber 29 in a direction parallel to the normal driving direction D of the motor vehicle 1 can take place at relatively low speed as a result of which the centrifugal force exerted on the moisture in the air flow will be larger than the centrifugal force exerted on the air in the air flow which is beneficial for separation of moisture from the air flow. Preferably the cross-section area of the passages 22A, 22B, 22C is 1.5 times larger than the cross-section area of the air inlet opening 14.

Due to the under pressure created by the climate control system 7 the air flow in the air-moisture separation chamber 29 is diverted vertically upwards in the direction F4. In particular due to this change of flow direction and the vertical positioning of the cover plate 21 moisture is efficiently removed from the air. The air flow further passes through the transfer opening 24 of the cover plate 21 into the aperture 17 and thus is transferred from the air-moisture separation chamber 29 via the transfer opening 24 and the aperture 17 to the air outlet opening 15 and towards the climate control system in a direction opposite the normal driving direction D of the motor vehicle 1.

As shown in Figure 6 an annular seal 25 is provided between the cover plate 21 and the free ends of the circumferential wall 16 and a linear seal 26 is provided between the cover plate 21 and the free end of the lower air guide 20 to prevent any false, possibly hot air from entering the air outlet opening 15. Additionally or alternatively a filter 30 can be provided in the air outlet opening 15.

By means of hinges the cover plate 21 is hingeably connected to the dash panel 5, so that the cover plate 21 can be pivoted to obtain access to the air intake chamber 23 to remove any debris if any carried along by the air. In particular the embodiment as shown in Figure 6 is advantageous in which the cover plate 21 is fixedly attached to the front grille 13. Since in the embodiment shown in Figure 6 the front grille 13 is hingeably connected to the dash panel, the cover plate 21 is hingeable together with the front grille 13. In this manner the front grille 13 and the cover plate 21 can be hinged away from the circumferential wall 16 thereby providing access to the air intake chamber 23.

As shown in the embodiment of Figure 6 the lower air guide 20 is provided with a drain 27 so that water collected at the bottom of the air intake chamber 23 can be drained. Although not shown in Figure 6, a further drain can be provided in the bottom of the air-moisture separation chamber 29 formed by the space between the front grille 13 and the cover plate 21 for the same reason. In addition it is observed that the expression "grille" used in this application refers to the front surface of the motor vehicle and that the front grille at least at the position of the air-moisture separation chamber is a closed front grille, i.e. does not comprise any openings.

## Claims

1. A motor vehicle (1) comprising a front grille (13) and a driver cabin (2) provided with a front windscreen (4) and a dash panel (5) extending below the front windscreen (4), the front windscreen (4), the dash panel (5) and the front grille (13) being arranged substantially transversely to a normal driving direction (D) of the motor vehicle (1), a climate control system (7) for the driver cabin (2) and an air intake assembly (8) for providing air from an exterior (E) of the motor vehicle (1) to the climate control system (7), , the air intake assembly (8) comprising:
- an air inlet opening (14) adapted to receive air from the exterior (E) of the motor vehicle (1); and
- an air outlet opening (15) provided in the dash panel (5) for conveying air to the climate control system (7), wherein the air intake assembly (8) further comprises:
- a cover plate (21) vertically positioned between the dash panel (5) and the front grille (13);
- an air intake chamber (23) between the cover plate (21) and the dash panel (5); the air intake chamber (23) having a top wall (9) the air inlet opening (14) providing air from the exterior (E) of the motor vehicle (1) into the air intake chamber (23) in a vertical direction downwards; and
- an air-moisture separation chamber (29) between the cover plate (21) and the front grille (13); **characterized in that**
- the cover plate (21) comprises at least one passage (22A, 22B, 22C) for transferring air from air intake chamber (23) to the air-moisture separation chamber (29) in a direction opposite the normal driving direction (D) of the motor vehicle (1), the cover plate (21) further having an transfer opening (24) positioned vertically above the at least one passage (22A, 22B, 22C), the transfer opening (24) being in fluid communication with the air outlet opening (15) for passing through air from the air-moisture separation chamber (29) into the air outlet opening (15) in a direction opposite the normal driving direction (D) of the motor vehicle (1).

2. A motor vehicle (1) according to claim 1, **characterized in that** the air intake chamber (23) is defined by a top wall (9), the cover plate (21), side air guides (18, 19) extending downwards from the top wall (9), and a lower air guide (20) extending between lower ends (18A, 19A) of the side air guides (18, 19), and **in that** the air intake assembly (8) further comprises:
- a circumferential wall (16) surrounding the air outlet opening (15) in the dash panel (5), free end surfaces of the circumferential wall (16) defining an aperture (17) in fluid communication with the air outlet opening (15), the circumferential wall (16) being positioned between the top wall (9) and the lower air guide (20);
- the circumferential wall (16), the side air guides (18, 19) and the lower air guide (20) preferably having the same depth;
- the cover plate (21) engaging the free ends of the circumferential wall (16), free ends of the side air guides (18, 19) and a free end of the lower air guide (20); the at least one passage (22A, 22B, 22C) being arranged at a lower end (21A) of the cover plate (21), preferably such that the passages (22A, 22B, 22C) are positioned between the lower air guide (20) and a lowest portion of the circumferential wall (16).

3. A motor vehicle (1) according to claim 2, **characterized in that** the side air guides (18, 19) are arranged symmetrical with regard to the circumferential wall (16).

4. A motor vehicle (1) according to claim 2, **characterized in that** the side air guides (18, 19) are arranged asymmetrical with regard to the circumferential wall (16), wherein preferably one side air guide of the pair of side air guides (18, 19) forms a part of the circumferential wall (16).

5. A motor vehicle (1) as claimed in any one of the preceding claims, **characterized in that** the at least one passage (22A, 22B, 22C) has a cross-section area for allowing low speed transfer of air from the air intake chamber (23) to the air-moisture separation chamber (29) in a direction parallel to the normal driving direction (D) of the motor vehicle (1), the cross-section area of the passage being preferably 1.5 times larger than the cross-section area of the air inlet opening (14).

6. A motor vehicle (1) as claimed in any one of the preceding claims, **characterized in that** the cover plate (21) comprises a plurality of passages (22A, 22B, 22C).

7. A motor vehicle (1) as claimed in any one of the preceding claims, **characterized in that** an annular seal (25) is provided between the cover plate (21) and the free ends of the circumferential wall (16).

8. A motor vehicle (1) as claimed in any one of the preceding claims, **characterized in that** a linear seal (26) is provided between the cover plate (21) and the free end of the lower air guide (20).

9. A motor vehicle (1) as claimed in any one of the preceding claims, **characterized in that** the lower air guide (20) is provided with a drain (27).

10. A motor vehicle (1) as claimed in any one of the preceding claims, **characterized in that** the cover plate (21) is removably or hingeably connected to the dash panel (5).

11. A motor vehicle (1) as claimed in any one of the preceding claims, **characterized in that** the cover plate (21) is fixedly attached to the front grille (13), the front grille (13) preferably being removably or hingeably connected to dash panel (5).

12. A motor vehicle (1) as claimed in any one of the preceding claims, **characterized in that** a filter (30) is provided in the air outlet opening (15).

## Patentansprüche

1. Kraftfahrzeug (1) umfassend einen Frontgrill (13) und eine Fahrerkabine (2), die mit einer Frontscheibe (4) und einem sich unterhalb der Frontscheibe (4) erstreckenden Armaturenbrett (5) bereitgestellt ist, wobei die Frontscheibe (4), das Armaturenbrett (5) und der Frontgrill (13) im Wesentlichen quer zu einer normalen Fahrtrichtung (D) des Kraftfahrzeugs (1) angeordnet sind, ein Klimakontrollsystem (7) für die Fahrerkabine (2) und eine Lufteinlassanordnung (8) zum Bereitstellen von Luft von einem Außenbereich (E) des Kraftfahrzeugs (1) für das Klimakontrollsystem (7), die Lufteinlassanordnung (8) umfassend:
- eine Lufteinlassöffnung (14), die zum Aufnehmen von Luft von dem Außenbereich (E) des Kraftfahrzeugs (1) angepasst ist; und
- eine Luftauslassöffnung (15), die in dem Armaturenbrett (5) bereitgestellt ist, um Luft zu dem Klimakontrollsystem (7) zu befördern, wobei die Lufteinlassanordnung (8) ferner umfasst:
- eine Abdeckplatte (21), die vertikal zwischen dem Armaturenbrett (5) und dem Frontgrill (13) angeordnet ist;
- eine Lufteinlasskammer (23) zwischen der Abdeckplatte (21) und dem Armaturenbrett (5); wobei die Lufteinlasskammer (23) eine obere Wand (9) aufweist, wobei die Lufteinlassöffnung (14) Luft von dem Außenbereich (E) des Kraftfahrzeugs (1) in die Lufteinlasskammer (23) in einer vertikalen Richtung nach unten bereitstellt; und
- eine Luftfeuchtigkeitstrennkammer (29) zwischen der Abdeckplatte (21) und dem Frontgitter (13); **dadurch gekennzeichnet, dass**
- die Abdeckplatte (21) mindestens einen Durchgang (22A, 22B, 22C) zum Überführen von Luft aus der Lufteinlasskammer (23) in die Luftfeuchtigkeitstrennkammer (29) in einer Richtung entgegen der normalen Fahrtrichtung (D) des Kraftfahrzeugs (1) umfasst, wobei die Abdeckplatte (21) ferner eine Überführungsöffnung (24) aufweist, die vertikal über dem mindestens einen Durchgang (22A, 22B, 22C) angeordnet ist, wobei die Überführungsöffnung (24) in Fluidverbindung mit der Luftauslassöffnung (15) steht, um Luft aus der Luftfeuchtigkeitstrennkammer (29) in die Luftauslassöffnung (15) in einer Richtung entgegen der normalen Fahrtrichtung (D) des Kraftfahrzeugs (1) durchzulassen.

2. Kraftfahrzeug (1) nach Anspruch 1, **dadurch gekennzeichnet, dass** die Lufteinlasskammer (23) durch eine obere Wand (9), die Abdeckplatte (21), seitliche Luftführungen (18, 19), die sich von der oberen Wand (9) nach unten erstrecken, und eine untere Luftführung (20), die sich zwischen den unteren Enden (18A, 19A) der seitlichen Luftführungen (18, 19) erstreckt, definiert ist, und dass die Lufteinlassanordnung (8) ferner umfasst:
eine Umfangswand (16), die die Luftauslassöffnung (15) in dem Armaturenbrett (5) umgibt, wobei freie Endflächen der Umfangswand (16) eine Öffnung (17) in Fluidverbindung mit der Luftauslassöffnung (15) definieren, wobei die Umfangswand (16) zwischen der oberen Wand (9) und der unteren Luftführung (20) angeordnet ist;
- wobei die Umfangswand (16), die seitlichen Luftführungen (18, 19) und die untere Luftführung (20) vorzugsweise die gleiche Tiefe aufweisen;
- wobei die Abdeckplatte (21) an den freien Enden der Umfangswand (16), den freien Enden der seitlichen Luftführungen (18, 19) und einem freien Ende der unteren Luftführung (20) eingreift; wobei der mindestens eine Durchgang (22A, 22B, 22C) an einem unteren Ende (21A) der Abdeckplatte (21) angeordnet ist, vorzugsweise so, dass die Durchgänge (22A, 22B, 22C) zwischen der unteren Luftführung (20) und einem untersten Abschnitt der Umfangswand (16) angeordnet sind.

3. Kraftfahrzeug (1) nach Anspruch 2, **dadurch gekennzeichnet, dass** die seitlichen Luftführungen (18, 19) symmetrisch in Bezug auf die Umfangswand (16) angeordnet sind.

4. Kraftfahrzeug (1) nach Anspruch 2, **dadurch gekennzeichnet, dass** die seitlichen Luftführungen (18, 19) asymmetrisch in Bezug auf die Umfangswand (16) angeordnet sind, wobei vorzugsweise eine seitliche Luftführung des Paares von seitlichen Luftführungen (18, 19) einen Teil der Umfangswand (16) bildet.

5. Kraftfahrzeug (1) nach einem der vorstehenden Ansprüche, **dadurch gekennzeichnet, dass** der mindestens eine Durchgang (22A, 22B, 22C) eine Querschnittsfläche aufweist, die einen Lufttransfer mit niedriger Geschwindigkeit von der Lufteinlasskammer (23) zu der Luftfeuchtigkeitstrennkammer (29) in einer Richtung parallel zu der normalen Fahrtrichtung (D) des Kraftfahrzeugs (1) ermöglicht, wobei die Querschnittsfläche des Durchgangs vorzugsweise 1,5 mal größer ist als die Querschnittsfläche der Lufteinlassöffnung (14).

6. Kraftfahrzeug (1) nach einem der vorstehenden Ansprüche, **dadurch gekennzeichnet, dass** die Abdeckplatte (21) eine Vielzahl von Durchgängen (22A, 22B, 22C) umfasst.

7. Kraftfahrzeug (1) nach einem der vorstehenden Ansprüche, **dadurch gekennzeichnet, dass** zwischen der Abdeckplatte (21) und den freien Enden der Umfangswand (16) eine ringförmige Dichtung (25) bereitgestellt ist.

8. Kraftfahrzeug (1) nach einem der vorstehenden Ansprüche, **dadurch gekennzeichnet, dass** zwischen der Abdeckplatte (21) und dem freien Ende der unteren Luftführung (20) eine Lineardichtung (26) bereitgestellt ist.

9. Kraftfahrzeug (1) nach einem der vorstehenden Ansprüche, **dadurch gekennzeichnet, dass** die untere Luftführung (20) mit einem Abfluss (27) bereitgestellt ist.

10. Kraftfahrzeug (1) nach einem der vorstehenden Ansprüche, **dadurch gekennzeichnet, dass** die Abdeckplatte (21) mit dem Armaturenbrett (5) abnehmbar oder gelenkig verbunden ist.

11. Kraftfahrzeug (1) nach einem der vorstehenden Ansprüche, **dadurch gekennzeichnet, dass** die Abdeckplatte (21) fest an dem Frontgitter (13) angebracht ist, wobei das Frontgitter (13) vorzugsweise abnehmbar oder gelenkig mit dem Armaturenbrett (5) verbunden ist.

12. Kraftfahrzeug (1) nach einem der vorstehenden Ansprüche, **dadurch gekennzeichnet, dass** in der Luftauslassöffnung (15) ein Filter (30) bereitgestellt ist.

## Revendications

1. Véhicule automobile (1) comprenant une calandre (13) et une cabine de conducteur (2) pourvue d'un pare-brise avant (4) et d'un tableau de bord (5) s'étendant sous le pare-brise avant (4), le pare-brise avant (4), le tableau de bord (5) et la calandre avant (13) étant disposés sensiblement transversalement à une direction de conduite normale (D) du véhicule automobile (1), un système de climatisation (7) pour la cabine du conducteur (2) et un ensemble d'admission d'air (8) pour fournir de l'air à partir d'un extérieur (E) du véhicule à moteur (1) au système de climatisation (7), l'ensemble d'admission d'air (8) comprenant :
- une ouverture d'entrée d'air (14) adaptée pour recevoir de l'air de l'extérieur (E) du véhicule à moteur (1) ; et
- une ouverture de sortie d'air (15) prévue dans le tableau de bord (5) pour acheminer l'air vers le système de climatisation (7), l'ensemble d'admission d'air (8) comprenant en outre :
- une plaque de recouvrement (21) placée verticalement entre le tableau de bord (5) et la calandre (13) ;
- une chambre d'admission d'air (23) entre la plaque de recouvrement (21) et le tableau de bord (5) ; la chambre d'admission d'air (23) ayant une paroi supérieure (9), l'ouverture d'admission d'air (14) fournissant de l'air provenant de l'extérieur (E) du véhicule à moteur (1) dans la chambre d'admission d'air (23) dans une direction verticale vers le bas ; et
- une chambre de séparation air-humidité (29) entre la plaque de recouvrement (21) et la calandre (13) ; **caractérisée en ce que**
- la plaque de recouvrement (21) comprend au moins un passage (22A, 22B, 22C) pour transférer l'air de la chambre d'admission d'air (23) à la chambre de séparation air-humidité (29) dans une direction opposée à la direction de conduite normale (D) du véhicule à moteur (1), la plaque de recouvrement (21) ayant en outre une ouverture de transfert (24) positionnée verticalement au-dessus du au moins un passage (22A, 22B, 22C), l'ouverture de transfert (24) étant en communication fluidique avec l'ouverture de sortie d'air (15) pour faire passer l'air de la chambre de séparation air-humidité (29) dans l'ouverture de sortie d'air (15) dans une direction opposée à la direction de conduite normale (D) du véhicule à moteur (1).

2. Véhicule automobile (1) selon la revendication 1, **caractérisé en ce que** la chambre d'admission d'air (23) est définie par une paroi supérieure (9), la plaque de recouvrement (21), des guides d'air latéraux (18, 19) s'étendant vers le bas à partir de la paroi supérieure (9), et un guide d'air inférieur (20) s'étendant entre les extrémités inférieures (18A, 19A) des guides d'air latéraux (18, 19), et **en ce que** l'ensemble d'admission d'air (8) comprend en outre :
- une paroi circonférentielle (16) entourant l'ouverture de sortie d'air (15) dans le tableau de bord (5), les surfaces des extrémités libres de la paroi circonférentielle (16) définissant une ouverture (17) en communication fluide avec l'ouverture de sortie d'air (15), la paroi circonférentielle (16) étant positionnée entre la paroi supérieure (9) et le guide d'air inférieur (20) ;
- la paroi circonférentielle (16), les guides d'air latéraux (18, 19) et le guide d'air inférieur (20) ayant de préférence la même profondeur ;
- la plaque de recouvrement (21) engage les extrémités libres de la paroi circonférentielle (16), les extrémités libres des guides d'air latéraux (18, 19) et une extrémité libre du guide d'air inférieur (20) ; l'au moins un passage (22A, 22B, 22C) est disposé à une extrémité inférieure (21 A) de la plaque de recouvrement (21), de préférence de manière à ce que les passages (22A, 22B, 22C) soient positionnés entre le guide d'air inférieur (20) et une partie la plus basse de la paroi circonférentielle (16).

3. Véhicule automobile (1) selon la revendication 2, **caractérisé en ce que** les guides d'air latéraux (18, 19) sont disposés symétriquement par rapport à la paroi circonférentielle (16).

4. Véhicule automobile (1) selon la revendication 2, **caractérisé en ce que** les guides d'air latéraux (18, 19) sont disposés de manière asymétrique par rapport à la paroi circonférentielle (16), un guide d'air latéral de la paire de guides d'air latéraux (18, 19) formant de préférence une partie de la paroi circonférentielle (16).

5. Véhicule automobile (1) selon l'une quelconque des revendications précédentes, **caractérisé en ce que** l'au moins un passage (22A, 22B, 22C) présente une section transversale permettant un transfert à faible vitesse de l'air de la chambre d'admission d'air (23) à la chambre de séparation air-humidité (29) dans une direction parallèle à la direction de conduite normale (D) du véhicule automobile (1), la section transversale du passage étant de préférence 1,5 fois plus grande que la section transversale de l'ouverture d'admission d'air (14).

6. Véhicule automobile (1) selon l'une quelconque des revendications précédentes, **caractérisé en ce que** la plaque de recouvrement (21) comprend une pluralité de passages (22A, 22B, 22C).

7. Véhicule automobile (1) selon l'une quelconque des revendications précédentes, **caractérisé en ce qu'**un joint annulaire (25) est prévu entre la plaque de recouvrement (21) et les extrémités libres de la paroi circonférentielle (16).

8. Véhicule automobile (1) selon l'une quelconque des revendications précédentes, **caractérisé en ce qu'**un joint linéaire (26) est prévu entre la plaque de recouvrement (21) et l'extrémité libre du guide d'air inférieur (20).

9. Véhicule automobile (1) selon l'une quelconque des revendications précédentes, **caractérisé en ce que** le guide d'air inférieur (20) est pourvu d'un drain (27).

10. Véhicule automobile (1) selon l'une quelconque des revendications précédentes, **caractérisé par le fait que** la plaque de recouvrement (21) est reliée de manière amovible ou articulée au tableau de bord (5).

11. Véhicule automobile (1) selon l'une quelconque des revendications précédentes, **caractérisé en ce que** la plaque de recouvrement (21) est fixée à la calandre (13), la calandre (13) étant de préférence reliée de manière amovible ou articulée au tableau de bord (5).

12. Véhicule automobile (1) selon l'une quelconque des revendications précédentes, **caractérisé en ce qu'**un filtre (30) est prévu dans l'ouverture de sortie d'air (15).
